(19) Europäisches Patentamt
European Patent Office
Office européen des brevets

(11) **EP 1 986 023 A1**

(12) **EUROPEAN PATENT APPLICATION**
published in accordance with Art. 158(3) EPC

(43) Date of publication:
**29.10.2008 Bulletin 2008/44**

(21) Application number: **07708311.1**

(22) Date of filing: **09.02.2007**

(51) Int Cl.:
*G02B 3/14* (2006.01)    *G02B 3/00* (2006.01)
*G02B 26/08* (2006.01)

(86) International application number:
**PCT/JP2007/052375**

(87) International publication number:
**WO 2007/094259 (23.08.2007 Gazette 2007/34)**

(84) Designated Contracting States:
**DE FR GB**

(30) Priority: **13.02.2006 JP 2006035155**

(71) Applicant: **Sony Corporation**
**Minato-ku**
**Tokyo 108-0075 (JP)**

(72) Inventor: **TAKAI, Yuichi**
**Tokyo 1080075 (JP)**

(74) Representative: **Thévenet, Jean-Bruno et al**
**Cabinet Beau de Loménie**
**158, rue de l'Université**
**75340 Paris Cédex 07 (FR)**

(54) **OPTICAL ELEMENT, AND LENS ARRAY**

(57) A manufacturing process is facilitated and micro fabrication can be performed. In addition, variation in an optical axis that depends on the processing accuracy and decentering of a droplet in the voltage-driven state is suppressed. In a lens array 40 according to the present invention, a plurality of pyramidal recesses 48 that receive droplets 52 are two-dimensionally formed in a sealed cell 50 in which first liquid 51 that is conductive and second liquid (droplet) 52 that is insulative are contained without being mixed with each other. Since the recesses 48 are formed in a pyramidal shape, the centering performance of the droplets 52 placed in the recesses can be improved and variation in optical axes of lens elements formed of interfaces 53 of the droplets 52 can be suppressed. In addition, the optical axes can be stably positioned and decentering of the droplets 52 in the voltage-driven state can be suppressed. Furthermore, micro fabrication can be facilitated compared to the case in which the recesses 48 are conical, and the recesses can be densely arranged.

FIG. 1

**Description**

Technical Field

The present invention relates to an optical element and a lens array that utilize electrowetting effect (electrocapillarity).

Background Art

Recently, the development of optical elements utilizing the electrowetting effect has progressed. The electrowetting effect is a phenomenon in which, when a voltage is applied between conductive liquid and an electrode, energy at a solid-liquid interface between the surface of the electrode and the liquid changes and the shape of the liquid surface changes accordingly.

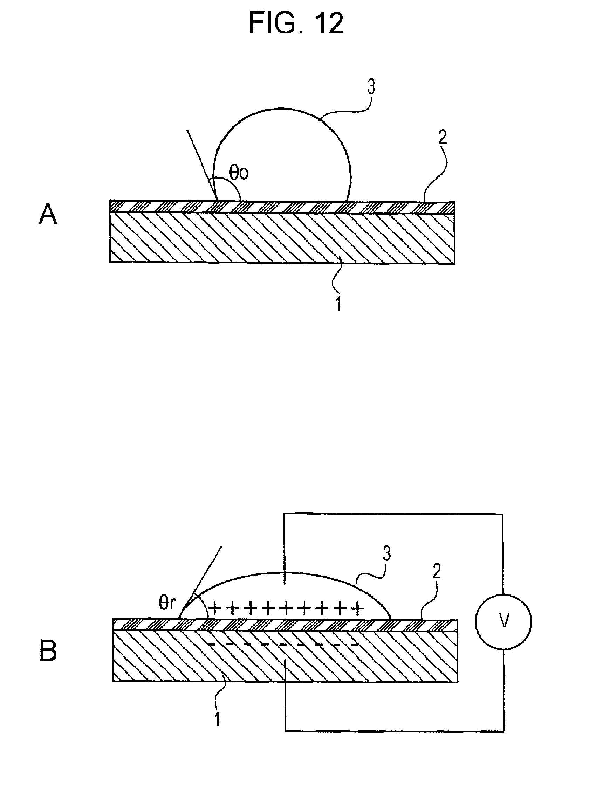

Part A of Fig. 12 and part B of Fig. 12 show principle diagrams illustrating the electrowetting effect.

As shown in part A of Fig. 12, an insulating film 2 is formed on a surface of an electrode 1, and a droplet 3 of electrolyte is placed on the insulating film 2. The surface of the insulating film 2 is subjected to water repellent finishing. In a no-voltage state shown in part A of Fig. 12, interaction energy between the surface of the insulating film 2 and the droplet 3 is low and a contact angle θ0 is large. Here, the contact angle θ0 is an angle between the surface of the insulating film 2 and a tangent line of the droplet 3, and depends on characteristics such as the surface tension of the droplet 3 and the surface energy of the insulating film 2.

On the other hand, as shown in part B of Fig. 12, when a predetermined voltage is applied between the electrode 1 and the droplet 3, a charge double layer is formed at the interface by free electrons on the electrode 1 side and electrolyte ions on the droplet 3 side, thereby inducing a change in the surface tension of the droplet 3. This phenomenon is the electrowetting effect, and the contact angle of the droplet 3 changes in accordance with the magnitude of the applied voltage. In other words, in part B of Fig. 12, the contact angle θv can be expressed as a function of voltage V as in the following Equation (1):

[Equation 1]

$$\cos\theta_V = \cos\theta_0 + \frac{\varepsilon_0\varepsilon}{2e\gamma_{LG}}V^2 \quad \cdots (1)$$

$\gamma_{LG}$ : Surface tension of electrolyte
$e$ : Film thickness of insulating film
$\varepsilon$ : Relative dielectric constant of insulating film
$\varepsilon_0$ : Magnetic permeability of vacuum

As described above, the surface shape (curvature) of the droplet 3 changes in accordance with the magnitude of the voltage V applied between the electrode 1 and the droplet 3. Therefore, when the droplet 3 is used as a lens element, an optical element having a focal position that can be electrically controlled can be obtained.

Thus, the development of optical apparatuses including optical elements structured as above is progressing. For example, a lens array for a strobe apparatus has been proposed in Japanese Unexamined Patent Application Publication No. 2000-356708. In this example, a varifocal lens is structured by enclosing conductive liquid and droplets of insulative liquid arranged in an array pattern on a water-repellent film provided on a surface of a substrate. In this structure, individual lenses are formed in the shape of the interface between the insulative liquid and the conductive liquid. The shape of each lens is electrically controlled by utilizing the electrowetting effect, and accordingly the focal length is varied.

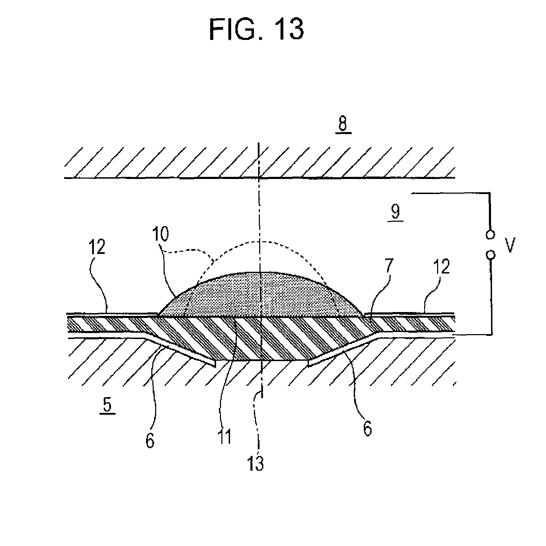

However, in this type of optical element, it is difficult to maintain an optical axis of each lens at a constant position before and after the application of a voltage. Therefore, establishment of a technique for improving the centering performance of the lenses has become an important issue. Thus, the structure shown in Fig. 13 is disclosed in Pamphlet of International Publication No. 99/18456.

In Fig. 13, an insulating layer 7 is formed on a lower transparent substrate 5 with an electrode layer 6 provided therebetween. An upper transparent substrate 8 is disposed so as to face a flat surface of the insulating layer 7. First liquid 9, which is conductive and transparent, and second liquid 10, which is insulative and transparent, are both enclosed between the insulating layer 7 and the upper transparent substrate 8. The first liquid 9 and the second liquid 10 have refractive indices that are different from each other and specific gravities that are similar to each other, and exist independently of each other without being mixed with each other. A water repellent surface 11 is provided at a central area of a surface of the insulating layer 7. The second liquid (droplet) 10 spreads over the water repellent surface 11 in the surface of the insulating layer 7, thereby forming a convex lens element with a vertex on an optical axis 13. On the other hand, an area surrounding the water repellent surface 11 in the surface of the insulating layer 7 is covered with a hydrophilic film 12, which is in contact with the first liquid 9.

In the optical element having the above-described structure, when no voltage is applied between the electrode layer 6 and the first liquid 9, the interface between the first liquid 9 and the second liquid 10 is shaped as shown by the solid line in Fig. 13 and the second liquid 10 spreads over the water repellent surface 11 in the surface of the insulating layer 7. In this state, if a voltage is applied between the electrode layer 6 and the first liquid 9, the first liquid 9 moves onto the water repellent surface 11 from an area surrounding the water repellent surface 11 due to the electrowetting effect. As a result, the shape of the interface between the first liquid 9 and the second liquid 10 changes into, for example, the shape shown by the broken line in Fig. 13. Thus, the curvature of the interface between the first liquid 9 and the second liquid 10 in the state in which the voltage is applied is greater than that in the state in which no voltage is applied. Therefore, the focal length in the state in which the voltage is applied can be made shorter than that in the state in which no voltage is applied.

Also, in the structure shown in Fig. 13, to suppress the displacement (decentering) of the optical axis of the droplet 10 forming the lens element between the state in which no voltage is applied and the state in which the voltage is applied, the electrode layer 6 is formed in a recessed shape such that the distance between the electrode layer 6 and the surface of the insulating layer 7 at the position below the central area of the droplet 10 is longer than that at the position below the periphery of the droplet 10. Thus, an electric potential distribution is provided between the electrode layer 6 and the surface of the insulating layer 7, so that a movement of the droplet 10 centered on the optical axis 13 can be easily obtained.

The movement characteristics of the droplet 10 largely depend on the patterning accuracy of the water-repellent area and the hydrophilic area on the surface of the insulating layer 7. However, it is difficult to perform the patterning process with high accuracy, and variations often occur between individual lens elements. Therefore, if the individual lens elements are arranged in an array pattern, there will be a problem that the optical axis of each lens element will be unstable and the characteristics will vary.

On the other hand, a lens element obtained by forming a conical indentation (recess) 15 in the insulating layer 7 and placing the droplet 10 in the indentation 15, as shown in Fig. 14, is disclose in, for example, Japanese Unexamined Patent Application Publication (Translation of PCT Application) No. 2002-540464. In this case, the indentation 15 is formed at the position so that the curvature thereof at a point (CP1) on the boundary of contact between the droplet 10 and the indentation 15 is smaller than or opposite to the curvature of a circle (TC) that is in contact with the surface of the indentation 15 at both the above-mentioned point and a point (CP2) symmetric thereto on the surface. Thus, by placing the droplet 10 in the indentation 15, the centering performance of the droplet 10 is improved and the displacement (decentering) of the optical axis is suppressed.

However, in the structure shown in Fig. 14 that is described in Japanese Unexamined Patent Application Publication (Translation of PCT Application) No. 2002-540464, it is difficult to form the indentation 15 in a predetermined conical shape, and there is problem that the optical axis of the lens will vary if even a small processing error occurs. This leads to decentering of the droplet 10 in the voltage-driven state. In addition, although it is necessary to form lenses with a smaller diameter to form a lens array, there is a problem that it is extremely difficult to form small indentations 15 having the above-described structure with high accuracy.

In light of the above-described problems, an object of the present invention is to provide an optical element and a lens array which can be easily manufactured, which can be formed by micro fabrication, and which are capable of suppressing variation in the optical axis that depends on the processing accuracy and decentering of a droplet in the voltage-driven state.


Disclosure of Invention

To achieve the above-described object, in an optical element according to the present invention, a droplet is placed in a sealed cell and a pyramidal recess that receives the droplet is formed in the cell.

According to the present invention, since the recess that receives the droplet is formed in a pyramidal shape, the centering performance of the droplet placed in the recess can be improved. In addition, variation in the optical axis of the lens element formed by the droplet can be suppressed. In addition, the optical axis can be stably positioned and decentering of the droplet in the voltage-driven state can be suppressed. Furthermore, the manufacturing process can be facilitated compared to the case in which the recess is conical, and the recess can be formed by micro fabrication.

A lens array can be formed by two-dimensionally arranging a plurality of recesses that are structured as above. In particular, according to the present invention, since the recesses are formed in a pyramidal shape, the recesses can be densely arranged along a plane. Thus, a lens surface having a large effective area in the lens array as a whole can be provided.

The recess may be formed in a quadrangular pyramid shape or a quadrangular trapezoidal pyramid shape. However, the shape of the recess is not limited to this, and the recess may also have a triangular pyramid shape, a hexagonal pyramid shape, a triangular trapezoidal pyramid shape, or a hexagonal trapezoidal pyramid shape. Furthermore, the trapezoidal pyramid shape referred to herein includes an inverted pyramid shape in which the area of the open side of the recess is larger than the area of a bottom portion of the recess and a pyramidal shape in which the area of the open side of the recess is smaller than the area of a bottom portion of the recess.

Each of inclined surfaces defining inner peripheral surfaces of the recess may have substantially the same inclination angle. Alternatively, one or more of the inclined surfaces may have a different inclination angle. In addition, when, for example, the recess has a quadrangular trapezoidal pyramid shape, the quadrangle is not limited to a square, and may also be a rectangle or a parallelogram.

As for a method for forming the pyramidal recess, anisotropic wet etching, for example, of a surface of a single-crystal substrate made of silicon or the like or a metal plate is preferably performed. In such a case, an inclination angle of each of the peripheral surfaces of the recess can be easily and reliably set to a predetermined angle. However, the method is limited to this, and a dry etching process or a laser processing method may also be used.

In addition, a cell according to the present invention includes a pair of transparent substrates, a liquid chamber formed between the pair of transparent substrates, first liquid and second liquid contained in the liquid chamber and having refractive indices that are different from each other, and an electrode layer disposed in the liquid chamber and having a surface covered with an insulating film. The first liquid is conductive and the second liquid is insulative. The first liquid and the second liquid exist in the liquid chamber without being mixed with each other. In addition, the recess is formed in a face of the electrode layer and one of the first liquid and the second liquid is placed in the recess.

The first liquid and the second liquid have refractive indices that are different from each other. Therefore, the interface between the first liquid and the second liquid functions as a lens surface. The shape of the lens surface is determined by the volume of each of the first liquid and the second liquid, the interfacial tension, etc., and the shape of the lens surface can be changed by utilizing the electrowetting effect. Electrolyte, for example, is used as the first liquid, which is conductive, and silicone oil, for example, is used as the second liquid, which is insulative. A droplet of, for example, the second liquid is placed in the pyramidal recess.

In the above-described example, the pyramidal recess can be defined by a pyramidal through hole formed in a surface of a first electrode layer and a first transparent substrate that is bonded to one of the surfaces of the first electrode layer so as to close the through hole at one end thereof. A single crystal silicon substrate, for example, can be used as the first electrode layer. The surface of the first electrode layer having the recess is covered with an insulating film. The first electrode layer faces a second transparent substrate with a sealing layer disposed therebetween. The sealing layer is formed in such a shape that the sealing layer surrounds the recess. The first electrode layer and the second transparent substrate form the above-described cell according to the present invention. The first liquid and the second liquid are enclosed in the cell, and the second liquid, which is insulative, is placed in the recess. A second electrode layer that is in contact with the first liquid, which is conductive, is provided between the first electrode layer and the second transparent substrate. The second electrode layer may be a transparent electrode layer formed on the inner side of the second transparent substrate.

As described above, according to the optical element of the present invention, a lens element defined by the first liquid and the second liquid enclosed in the sealed cell can be easily and finely manufactured. In addition, variation in the lens optical axis that depends on the processing accuracy can be suppressed. Also, decentering of a droplet in the voltage-driven state can be suppressed.

In addition, according to the lens array of the present invention, the area of partition walls that separate the lenses can be reduced, whereby the effective lens area can be increased.

Brief Description of Drawings

[Fig. 1] Fig. 1 is a sectional side view showing the schematic structure of an optical element according to an embodiment of the present invention.
[Fig. 2] Fig. 2 is a perspective view illustrating a method for forming a pyramidal through hole in a silicon substrate included in the optical element.
[Fig. 3] Fig. 3 is a characteristic diagram showing the relationship between the drive voltage applied to the optical element and the focal length.
[Fig. 4] Fig. 4 is an exploded perspective view showing the schematic structure of a lens array according to an embodiment of the present invention.

[Fig. 5] Fig. 5 is a sectional side view of the main part of the lens array.

[Fig. 6] Fig. 6 shows sectional views illustrating the steps of a method for manufacturing the lens array.

[Fig. 7] Fig. 7 shows sectional views illustrating the steps of the method for manufacturing the lens array.

[Fig. 8] Fig. 8 is a sectional view of the main part illustrating the shapes of recesses according to a modification.

[Fig. 9] Fig. 9 is a sectional view of the main part illustrating the shape of a recess according to another modification.

[Fig. 10] Fig. 10 is a perspective view of recesses having a hexagonal pyramid shape.

[Fig. 11] Fig. 11 is a perspective view of recesses with rectangular openings.

[Fig. 12] Fig. 12 is a diagram illustrating the electrowetting effect (electrocapillarity).

[Fig. 13] Fig. 13 is a sectional view of the main part showing the schematic structure of an optical element according to a related art.

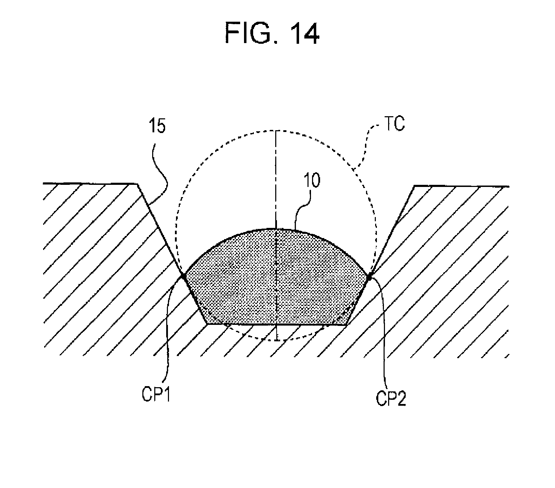

[Fig. 14] Fig. 14 is a sectional view of the main part showing the schematic structure of another optical element according to a related art.

Best Modes for Carrying Out the Invention

Hereinafter, embodiments of the present invention will be described with reference to the drawings.

(First Embodiment)

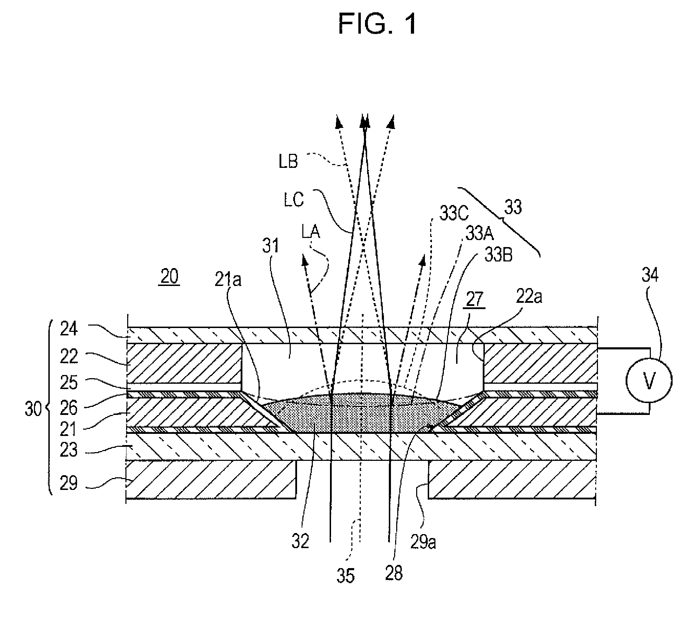

Fig. 1 is a sectional side view showing the schematic structure of an optical element 20 according to a first embodiment of the present invention. In the optical element 20 according to the present embodiment, first liquid 31 and second liquid 32 are contained in a liquid chamber 27 formed in a sealed cell 30, and a liquid lens element is formed in which an interface 33 between the first liquid 31 and the second liquid 32 functions as a lens surface.

Transparent conductive liquid is used as the first liquid 31. For example, polar liquid such as water, electrolyte (aqueous solution of electrolyte such as potassium chloride, sodium chloride, and lithium chloride), alcohols, such as methyl alcohol and ethyl alcohol, having small molecular weight, and ambient temperature molten salt (ionic liquid) may be used.

Transparent insulating liquid is used as the second liquid 32. For example, nonpolar solvent such as hydrocarbon materials including decane, dodecane, hexadecane, and undecane, silicone oil, and fluorinated materials may be used.

The first liquid 31 and the second liquid 32 have refractive indices that are different from each other, and are made of materials capable of existing in the liquid chamber 27 without being mixed with each other. More specifically, in the present embodiment, aqueous solution of lithium chloride (concentration 3.66 wt%, refractive index 1.34) is used as the first liquid 31 and silicone oil (TSF437 produced by GE Toshiba Silicone Co., Ltd., refractive index 1.49) is used as the second liquid 32. In addition, the first liquid 31 and the second liquid 32 preferably have specific gravities that are similar to each other.

It is to be noted that the "first liquid" is called electrolyte 31 and the "second liquid" is called droplet 32 in the following explanation.

Next, the structure of the cell 30 will be described below.

The cell 30 includes a pair of upper and lower transparent substrates 23 and 24. A first electrode layer 21 is bonded to an inner side of the lower transparent substrate 23, which serves as a first transparent substrate, and a second electrode layer 22 is bonded to an inner side of the upper transparent substrate 24, which serves as a second transparent substrate. In addition, the first and second electrode layers 21 and 22 are bonded together with a sealing layer 25 therebetween. Thus, the cell 30 having the liquid chamber 27 therein is obtained. In addition, in the example shown in the figure, a support plate 29 having a light-transmitting hole 29a formed therein is bonded to an outer side of the lower transparent substrate 23.

The pair of transparent substrates 23 and 24 may be formed of glass substrates, non-conductive plastic substrates, films, sheets, or the like. The sealing layer 25 may be formed of a material like rubber and resin material that can ensure liquid tightness. In addition, the electrode layers 21 and 22 may be formed of a metal, conductive oxide, semiconductor material, or the like.

A through hole 21a having an inverted quadrangular pyramid shape is formed in the first electrode layer 21. An opening 22a having an opening diameter that is similar to that of a large-diameter portion of the through hole 21a is formed in the second electrode layer 22. Each of the through hole 21a, the opening 22a, and the light-transmitting hole 29a in the support plate 29 is aligned on an optical axis 35, and serves as an entrance hole or an exit hole for light that passes through the cell 30.

In the present embodiment, a single crystal silicon substrate is used as the first electrode layer 21. An N-type substrate or a P-type substrate in which a necessary amount of dopant (impurity ions) that is necessary for obtaining a predetermined conductivity is added is used as the single crystal silicon substrate. However, a non-dope type single crystal silicon substrate may also be used in accordance with the specification or the like.

As a method for forming the through hole 21a having an inverted quadrangular pyramid shape in the first electrode layer 21, an anisotropic wet etching method is preferable. In the case where a single crystal silicon substrate, such as silicon, is used as the first electrode layer 21, etching selectivity occurs in accordance with the crystal orientation. Therefore, each of the inner peripheral surfaces of the through hole 21a can be easily formed as an inclined surface (tapered surface) having a predetermined inclination angle. In addition, the inner peripheral surfaces of the through hole 21a are crystal faces, and are therefore highly flat. As a result, the electrolyte 31 can be smoothly moved by the electrowetting effect and the shape of the interface 33 can be easily changed.

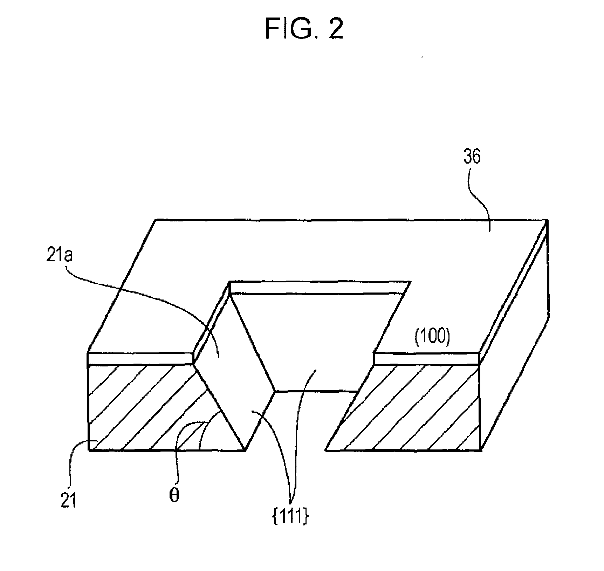

In the present embodiment, as schematically shown in Fig. 2, the (100) surface of a silicon substrate is set as a surface to be processed. Thus, the through hole 21a having an inverted quadrangular pyramid shape is formed such that the inner peripheral surfaces thereof are defined by inclined surfaces (the {111} surfaces) with an inclination angle θ of 55°. The shape of the through hole 21a is not limited to a square pyramid shape, and may also be rectangular in a plan view. Here, Reference Numeral 36 in Fig. 2 denotes a mask pattern.

The entire surface of the first electrode layer 21 including the through hole 21a is covered with an insulating film 26. The insulating film 26 is not particularly limited as long as it is made of an insulating material, but is preferably made of a material having a relatively high dielectric constant. In addition, to obtain a relatively large capacitance, the film thickness of the insulating film 26 is preferably small. However, it is necessary that the film thickness be equal to or larger than a thickness at which the insulating strength can be ensured. Examples of materials having a relatively high dielectric constant include metal oxides such as tantalum oxide and titanium oxide. However, the material is, of course, not limited to this. A method for forming the insulating film 26 is also not particularly limited, and vacuum film forming methods such as a sputtering method, a CVD method, and a deposition method and other various coating methods such as a plating method, an electrodeposition method, a coating method, and a dipping method may be adopted. Here, it is only necessary that the insulating film 26 be formed on at least the inner side of the first electrode layer 21.

In addition, the insulating film 26 preferably exhibits water repellency in an inner peripheral area of the through hole 21a with which the droplet 32 is in contact. Examples of methods for forming the water-repellent film include a method of forming a film of poly-para-xylylene by a CVD method and a method of coating the surface of the electrode layer with a material like PVdF and PTFE, which are fluorinated polymers. Alternatively, the insulating film 26 may also be formed in a layered structure in which a plurality of materials including a high dielectric constant material and a water repellent material are combined.

Here, the method for forming the through hole 21a in the first electrode layer 21 is not limited to the above-mentioned examples. For example, a laser processing method and mechanical processing methods such as cutting may also be adopted. In addition, the opening 22a may also be formed in the second electrode layer 22 by methods similar to the above-mentioned examples.

The liquid chamber 27 is formed of an inner space of the recess 28 defined by the through hole 21a in the first electrode layer 21 and the lower transparent substrate 23, an inner space of the opening portion 22a in the second electrode layer 22, and a gap (corresponding to the thickness of the sealing layer 25) between the first electrode layer 21 and the second electrode layer 22. The electrolyte 31 and the droplet 32 fill the entire space of the liquid chamber 27. The electrolyte 31 is in contact with the second electrode layer 22, and the droplet 32 is placed in the recess 28.

A voltage source 34 is provided between the first electrode layer 21 and the second electrode layer 22. The shape of the interface 33 between the electrolyte 31 and the droplet 32 is spherical or aspherical, and the curvature thereof changes in accordance with the magnitude of a voltage supplied from the voltage source 34. In addition, the interface 33 serves as a lens surface having lens power corresponding to the difference in refractive index between the electrolyte 31 and the droplet 32. Thus, the focal length of light that is incident along the optical axis 35 can be varied by adjusting the magnitude of the voltage applied between the first electrode layer 21 and the electrolyte 31.

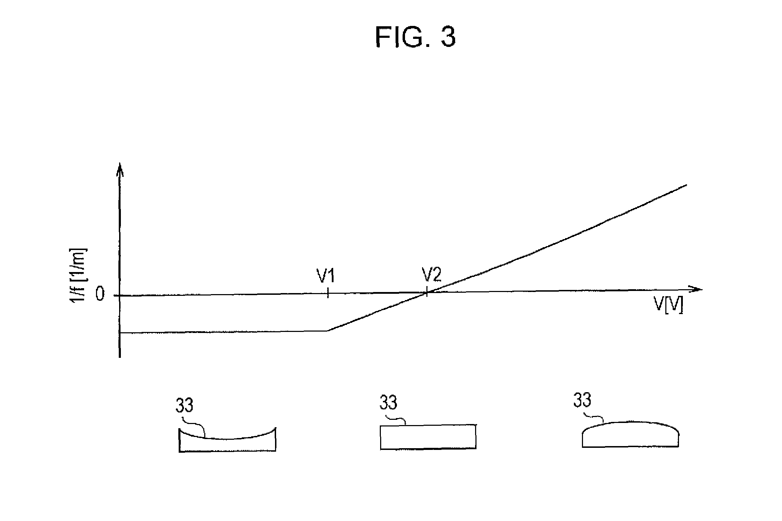

Fig. 3 shows the relationship between the applied voltage and the focal length. In Fig. 3, the vertical axis shows the reciprocal of the focal length f and the horizontal axis shows the applied voltage. In the state in which no voltage is applied (V=0), the droplet 32 spreads over the inner peripheral surfaces of the recess 28 in the manner shown by the one-dot chain line in Fig. 1. The interface 33A between the electrolyte 31 and the droplet 32 is balanced in the shape of a concave lens that is convex toward the lower transparent substrate 23. Therefore, the optical element 20 having the interface 33A in the above-described shape has a focal point on the lower transparent substrate 23 side, and light LA that is incident on the cell 30 from the lower transparent substrate 23 side is emitted in a diverging manner as shown in Fig. 1.

Next, when application of voltage between the first electrode layer 21 and the electrolyte 31 is started, movement of the electrolyte 31 toward the recess 28 is induced on the basis of the electrowetting effect. In a range from the start of application of voltage to a certain voltage V1, the electrolyte 31 does not significantly move. Therefore, there is only a small change in the shape of the interface 33A between the electrolyte 31 and the droplet 32.

When the magnitude of the applied voltage exceeds V1, wettability of the inner peripheral surfaces of the recess 28 with respect to the electrolyte 31 increases and the electrolyte 31 starts to enter the recess 28 from the peripheral edges of the recess 28. As a result, the curvature of the interface 33 between the electrolyte 31 and the droplet 32 decreases and the shape of the interface becomes flat when the applied voltage is V2. In this state, no lens effect is obtained at the interface 33 and the focal length becomes infinite (1/f=0).

When the applied voltage is further increased, the area of the recess 28 that is occupied by the electrolyte 31 increases and the shape of the interface 33B between the electric field liquid 31 and the droplet 32 changes to the shape of a convex lens that is convex toward the upper transparent substrate 24 as shown by the solid line in Fig. 1. If the applied voltage is further increased from this state, the curvature of the interface 33 having the shape of a convex lens further increases. Thus, the interface 33C having the shape shown by the broken line in Fig. 1 can be obtained. Light LB and light LC that pass through the optical element 20 having the interface 33B and the interface 33C in the shape of a convex lens have focal points on the upper transparent substrate 24 side. The focal length of the light LC that passes through the lens shape of the interface 33C is shorter than that of the light LB that passes through the lens shape of the interface 33B. Thus, the optical element 20 according to the present embodiment functions as a varifocal lens having a focal length that can be adjusted in accordance with the magnitude of the applied voltage.

Thus, in the optical element 20 according to the present embodiment having the above-described structure, since the recess 28 that receives the droplet 32 is formed in a pyramidal shape, the centering performance of the droplet 32 placed in the recess 28 can be improved. Therefore, the optical axis of the droplet 32 can be stably positioned and decentering of the droplet 32 in the voltage-driven state can be suppressed.

In particular, in the present embodiment, an underlayer of the insulating film forming the inner peripheral surfaces of the recess 28 is formed of the first electrode layer 21. This configuration provides a guide function for moving the electrolyte 31 along the peripheral surfaces of the recess 28 when the voltage is applied, and greatly contributes to improving the centering performance of the droplet 32.

In addition, since the recess 28 is formed as an etching mark formed in the surface of the first electrode layer 21, the recess can be easily formed with high accuracy. Thus, variation in the optical axis due to processing errors can be suppressed.

Furthermore, since the recess 28 is formed in a pyramidal shape, the shape of the interface between the droplet 32 placed in the recess 28 and the electrolyte 31 can be set to an aspherical shape in areas near the peripheral edges of the recess 28. Therefore, the optical element 20 according to the present embodiment can be used as an aspherical lens element for correcting distortion (barrel distortion, pincushion distortion) in, for example, a camera. Examples of distortion include barrel distortion and pincushion distortion.

(Second Embodiment)

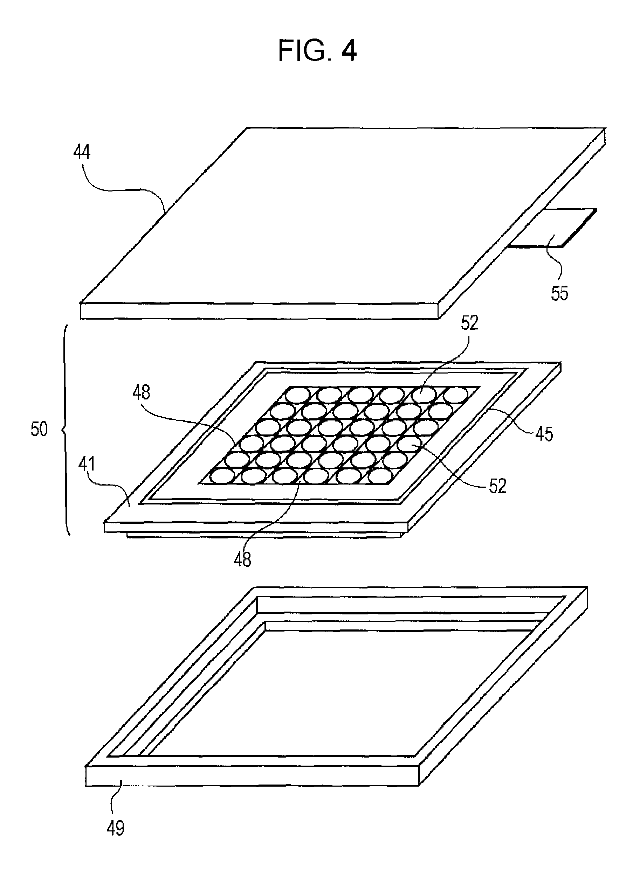

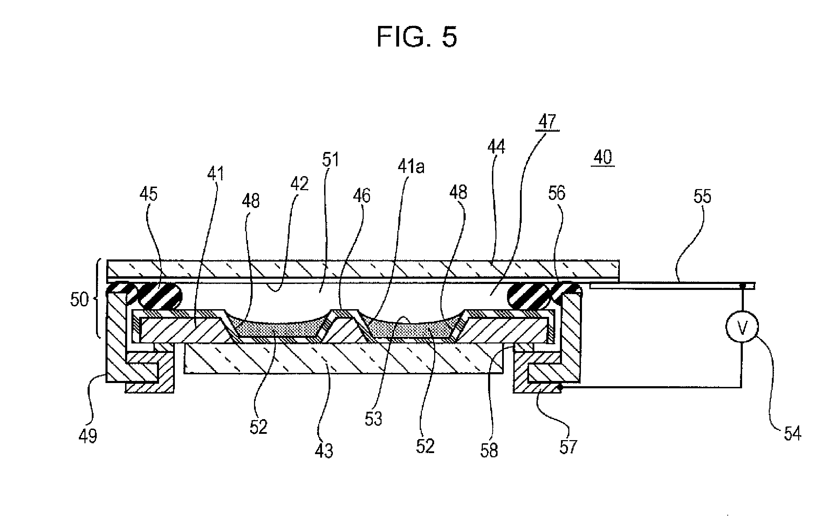

Next, a second embodiment of the present invention will be described. Fig. 4 and Fig. 5 show schematic structures of a lens array 40 including optical elements according to the present invention. Here, Fig. 4 is an exploded perspective view of the lens array 40, and Fig. 5 is a schematic sectional side view of the lens array 40.

The lens array 40 is formed by two-dimensionally arranging a plurality of optical elements (liquid lens elements) described above in the first embodiment. Here, in the sectional view shown in Fig. 5, an example in which two liquid lens elements are arranged next to each other in a cell 50 is shown for convenience of explanation.

The lens array 40 according to the present embodiment includes a silicon substrate 41 that functions as a first electrode layer, an upper transparent substrate 44 bonded to the silicon substrate 41 with a seal ring 45 disposed therebetween, and a housing 49 that houses the silicon substrate 41.

The silicon substrate 41 has a rectangular shape, and a plurality of through holes 41a having an inverted quadrangular pyramid shape are two-dimensionally formed in a surface thereof. A liquid chamber 47, which is filled with electrolyte 51 formed of first liquid that is conductive and droplets 52 formed of second liquid that is insulative, is formed between the silicon substrate 41 and the upper transparent substrate 44. A lower transparent substrate 43 is bonded to a bottom surface of the silicon substrate 41, and bottom portions of the through holes 41a are closed by the lower transparent substrate 43. Thus, a plurality of recesses 48 that are two-dimensionally arranged are formed in the liquid chamber 47.

The surface of the silicon substrate 41 is covered with an insulating film 46 in an area including the recesses 48. In the present embodiment, poly-para-xylylene having water repellency is used as the insulating film 46.

In the liquid chamber 47, the droplets 52 are placed in the respective recesses 48, and the remaining area is filled with the electrolyte 51. The electrolyte 51 and the droplets 52 have similar specific gravities and exist in the liquid chamber 47 without being mixed with each other, thereby forming spherical or aspherical interfaces 53 therebetween. In addition, the electrolyte 51 and the droplets 52 have refractive indices that are different from each other. Thus, lens elements having lens power corresponding to the difference between the refractive indices are formed at the interfaces 53.

A transparent electrode film 42, which functions as a second electrode layer, is formed on the inner surface of the upper transparent substrate 44. The transparent electrode film 42 is formed of, for example, transparent, conductive metal oxide such as ITO (Indium Tin Oxide) and IZO (Indium Zinc Oxide). A wiring member 55, which is connected to one of terminals of a voltage source 54, is adhered to the transparent electrode film 42 with conductive paste, an anisotropic conductive film, or the like interposed therebetween. A flexible wiring substrate or the like, for example, is used as the wiring member 55.

The electrolyte 51 in the liquid chamber 47 is in contact with the transparent electrode film 42, and a voltage can be applied between the silicon substrate 41 and the electrolyte 51 with the insulating film 46 disposed therebetween. The shape of the interfaces 53 greatly changes in accordance with the voltage applied between the silicon substrate 41 and the electrolyte 51. Therefore, the focal length of the lens elements can be controlled by adjusting the magnitude of the applied voltage.

The housing 49 is formed of, for example, an insulating material, such as plastic material, and has openings in top and bottom surfaces thereof. The top edge of the housing 49 is adhered to a peripheral portion of the bottom surface of the upper transparent substrate 44 with an adhesive 56, such as ultraviolet curing adhesive. The bottom end of the housing 49 is bent inward, and the metal electrode 57 is attached to an edge portion at the bottom end by means of caulking, adhesion, or other means. The metal electrode 57 is formed of a metal plate, such as a copper plate, and is connected to the other terminal of the voltage source 54. In addition, the metal electrode 57 is bonded to contact electrodes 58 formed on the bottom surface of the silicon substrate 41.

In the lens array 40 according to the present embodiment that is structured as described above, the shapes of the interfaces 53 between the electrolyte 51 and the droplets 52 placed in the respective recesses 48 can be simultaneously changed in accordance with the magnitude of the voltage applied between the silicon substrate 41 and the transparent electrode film 42. Thus, a sheet-shaped liquid lens element can be obtained. The sheet-shaped liquid lens element can be used as a focal-point varying element for a surface emitting light source in, for example, a strobe apparatus or the like of a camera.

In particular, according to the present embodiment, since the recesses 48 for receiving the droplets 52 have a quadrangular pyramid shape, the recesses 48 can be densely arranged in the surface of the silicon substrate 41 and the area of partition walls that separate the lenses can be reduced. As a result, a lens surface having a large effective area in the lens array as a whole can be provided.

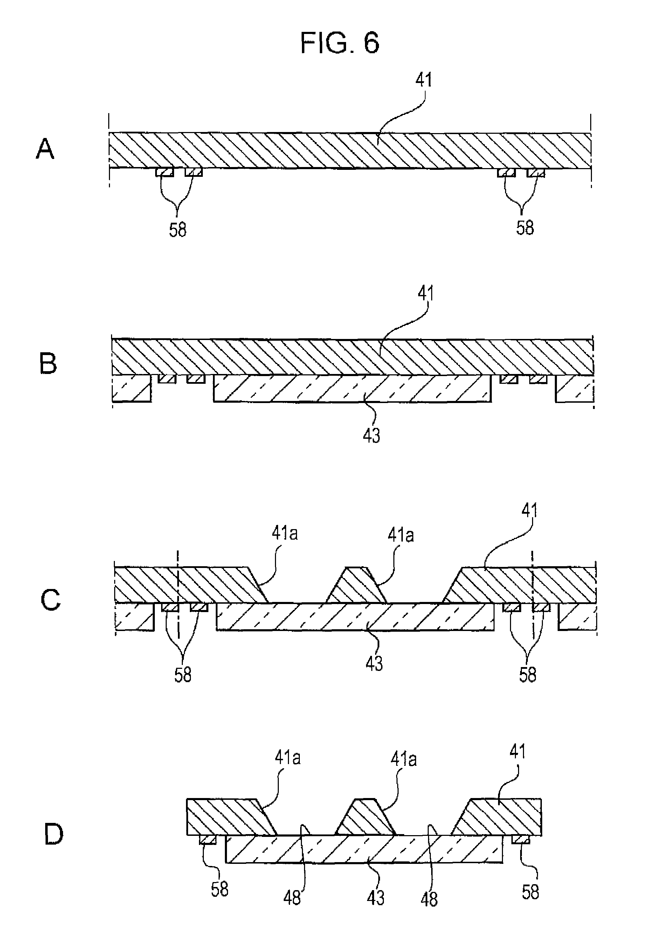

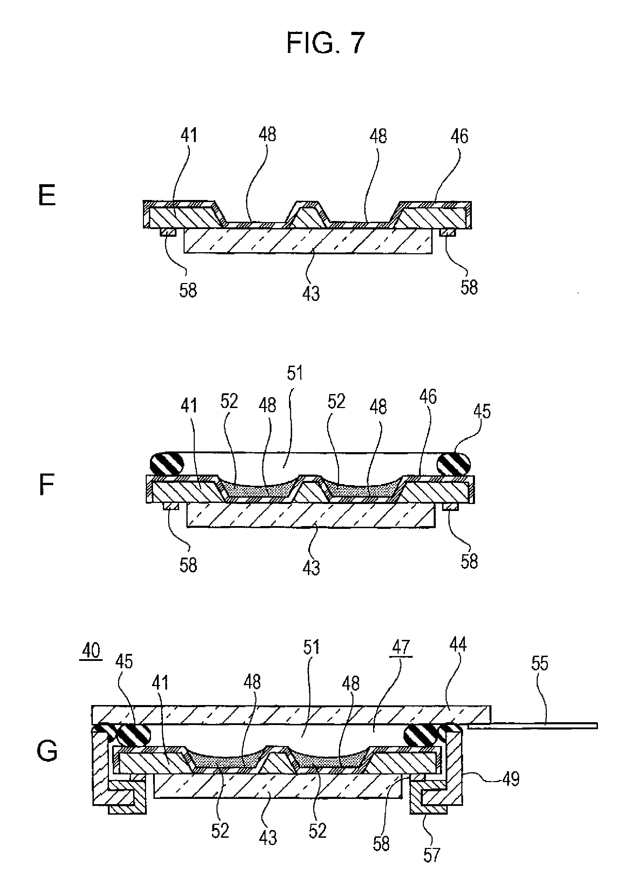

Next, a method for manufacturing the lens array 40 having the above-described structure will be described. Fig. 6 and Fig. 7 show sectional views illustrating the steps of the method for manufacturing the lens array 40.

[Contact Electrode Forming Step]

First, as shown in part A of Fig. 6, the contact electrodes 58 are formed on one of the surfaces (the bottom surface) of the silicon substrate 41. The bottom surface of the silicon substrate 41 is the surface to which the lower transparent substrate 43 is bonded, and a thin film made of Ti, Cr, etc., is formed thereon as an adhesion layer. After the adhesion layer is formed, the contact electrodes 58 are formed in a certain pattern by forming a thin metal film of Pt, Au, etc. having a stable surface by a vacuum deposition method or the like.

The contact electrodes 58 are preferably formed so as to have a relatively large thickness for ensuring an electrical contact to the metal electrode 57 attached to the bottom edge of the housing 49. Therefore, after the thin metal film of Pt, Au, etc. is formed, the thickness of the contact electrodes 58 can be increased by forming a plated film on the surfaces thereof.

In addition, the contact electrodes 58 can also be used as positioning marks showing the cutting positions in the step of dicing the silicon substrate 41. In such a case, as shown in the figure, the contact electrodes 58 are preferably formed in two lines such that a dicer (dicing saw) can be positioned therebetween. In addition, the contact electrodes 58 may also be used for distinguishing the side at which no insulating film is to be formed in an insulating film forming step, which will be described below.

[Lower Transparent Substrate Bonding Step]

Next, as shown in part B of Fig. 6, a step of bonding the lower transparent substrate 43 on the bottom surface of the silicon substrate 41 is performed. The lower transparent substrate 43 is formed of a glass substrate. As the glass substrate, a glass substrate of, for example, silica boron oxide glass typified by Pyrex glass ("Pyrex" is a registered trademark) that has a low coefficient of expansion is preferably used. Here, silica boron oxide glass has a low softening point, and therefore can be anode-coupled to the silicon substrate 41. Thus, good adherence can be obtained.

In addition, as a method for bonding the silicon substrate 41 and the lower transparent substrate 43 together, a bonding method using a low-melting glass as an adhesive, a bonding method in which the surface is activated by plasma irradiation, etc., may also be adopted. A resin adhesive may also be used as long as the resin adhesive is not damaged by the electrolyte 51 or the droplet 52.

[Recess Forming Step]

Next, as shown in part C of Fig. 6, a step of forming the pyramidal recesses 48 in the silicon wafer 41 by an anisotropic wet etching method is performed.

In the step of forming the recesses 48, a mask pattern having openings at positions where the recesses 48 are to be formed is formed on the other surface (top surface) of the silicon substrate 41 in advance. Solution of KOH (potassium hydroxide), for example, is used as etchant. In this case, a silicon nitride film is suitable as the mask pattern. However, the etchant is not limited to this, and alkaline solution, which is often used in anisotropic wet etching of silicon substrates, may also be used. The material of the mask is selected in accordance with the kind of solution.

The recesses 48 having an inverted quadrangular pyramid shape obtained by inverting a quadrangular pyramid are formed by suitably selecting the crystal orientation of the silicon substrate. The etchant penetrates the silicon substrate 41, and the etching process ends at the surface of the lower transparent substrate 43. Thus, the bottom surfaces of the recesses 48 are structured as glass windows that serve as opening surfaces of the lens elements. By improving the accuracy of the mask pattern, a lens array with a small variation between individual lenses can be formed. In addition, the recesses 48 are formed while the lower transparent substrate 43 is bonded to the bottom surface of the silicon substrate 41. Therefore, the bottom portions of the recesses 48 can be made flat, and lens elements with small aberrations can be formed.

[Dicing Step]

Next, as shown in part D of Fig. 6, a dicing step for singulating the silicon substrate 41 is performed. In the dicing step, dicing is performed at a position between the contact electrodes 58 formed in two lines with a predetermined interval therebetween on the bottom surface of the silicon substrate 41.

[Insulating Film Forming Step]

Next, as shown in part E of Fig. 7, the insulating film 46 is formed on the top surface of the singulated silicon substrate 41. The insulating film 46 is also formed on the surfaces of the recesses 48 formed in the silicon substrate 41. Since the surface to be coated has many steps, a material having high coating performance is suitable for use as the insulating film 46. In the present embodiment, a method is adopted in which a film of poly-para-xylylene having water repellency is formed by vacuum deposition.

The drive voltage of the lens elements largely depends on the film thickness of the insulating film 46. More specifically, as the film thickness of the insulating film 46 is reduced, the capacitance between the electrolyte 51 and the silicon substrate 41 is increased and the drive voltage of the lens elements can be reduced. Since the recesses 48 are formed by anisotropic wet etching of the silicon substrate 41, the tapered inner peripheral surfaces of the recesses 48 are flattened in nanoscales. Therefore, the film thickness of the insulating film 46 can be controlled with high accuracy and the film thickness of the insulating film 46 can be easily reduced. In this example, the film thickness of the insulating film 46 is set to about 3 $\mu$m.

[Liquid Injection Step]

Next, as shown in part F of Fig. 7, the seal ring 45 is placed on the top surface of the silicon substrate 41. The seal ring 45 is formed of, for example, an O-ring made of rubber, and is adhered to the silicon substrate 41 in a peripheral area thereof surrounding the area in which the recesses 48 are formed. Then, the electrolyte 51 and the droplets 52 are put into a space surrounded by the inner periphery of the seal ring 45. The droplets 52 are placed in the respective recesses 48 and the electrolyte 51 is provided so as to fill the space above the recesses 48.

Examples of methods for placing the droplets 52 in the recesses 48 include a method of filling the space surrounded by the inner periphery of the seal ring 45 with the electrolyte 51 and then dropping the droplets 52 into the recesses 48 by inserting an end of a nozzle into the electrolyte 51 and a method of dropping the droplets 52 into the recesses 48 and then pouring the electrolyte 51 from above the droplets 52.

[Assembly Step]

Lastly, as shown in part G of Fig. 7, a step of adhering the upper transparent substrate 44 to the silicon substrate 41, placing the silicon substrate 41 in the housing 49, and adhering and fixing the upper transparent substrate 44 and the housing 49 to each other is performed.

The upper transparent substrate 44 and the housing 49 are adhered to each other with a UV-reactive adhesive 56 that is cured by UV irradiation from the upper transparent substrate 44 side. In addition, when the upper transparent substrate 44 and the housing 49 are adhered to each other, the metal electrode 57 at the bottom end of the housing 49 comes into pressure contact with the contact electrodes 58 on the bottom surface of the silicon substrate 41, thereby providing an electrical connection. The metal electrode 57 is integrated with the housing 49 in advance by caulking, adhesion, or the like. In the step of adhering the upper transparent substrate 44 and the housing 49 to each other, parallelism between them is adjusted before assembly.

In addition, the wiring member 55 is bonded to the upper transparent substrate 44 with a conductive adhesive and an anisotropic conductive film disposed therebetween, so that the transparent electrode film 42 formed on the inner side of the upper transparent substrate 44 and the wiring member 55 are electrically connected to each other. Here, instead of attaching the wiring member 55, the transparent electrode film 42 itself may be used as a terminal. Alternatively, a metal film may be formed only on a portion of the transparent electrode film 42 that protrudes outside, and wires may be formed by wire bonding or soldering.

The lens array 40 according to the present embodiment is manufactured in the above-described manner.

According to the present embodiment, similar to the above-described first embodiment, the manufacturing process is facilitated and micro fabrication can be performed. In addition, variation in optical axes that depends on the processing accuracy and decentering of the droplets in the voltage-driven state can be suppressed. In addition, the area of partition walls that separate the lenses can be reduced, whereby the effective lens area can be increased.

In particular, since the recesses 48 in the silicon substrate 41 are formed by anisotropic wet etching, the plurality of recesses 48 can be simultaneously formed with high accuracy. In addition, the recesses 48 can be easily formed by micro fabrication.

In addition, since the tapered inner peripheral surfaces of the recesses 48 can be formed with high dimensional accuracy, the lens array 40 having extremely small variation in the volume of liquid in each lens, amount of deformation, and other optical characteristics can be manufactured. Furthermore, the lens array 40 which is extremely thin even after the assembly can be manufactured by reducing the thickness of components including the silicon substrate 41 and the pair of transparent substrates 43 and 44.

Although each embodiment of the present invention has been described above, the present invention is, of course, not limited to the embodiments and various modifications are possible on the basis of the technical idea of the present invention.

For example, in each of the above-described embodiments, an example has been explained in which the droplet 32, 52 made of the second liquid, which is insulative, is placed in the recess 28, 48 in the sealed cell 30, 50. However, the structure is of course not limited to this, and a droplet made of the first liquid, which is conductive, may also be placed in the recess 28, 48.

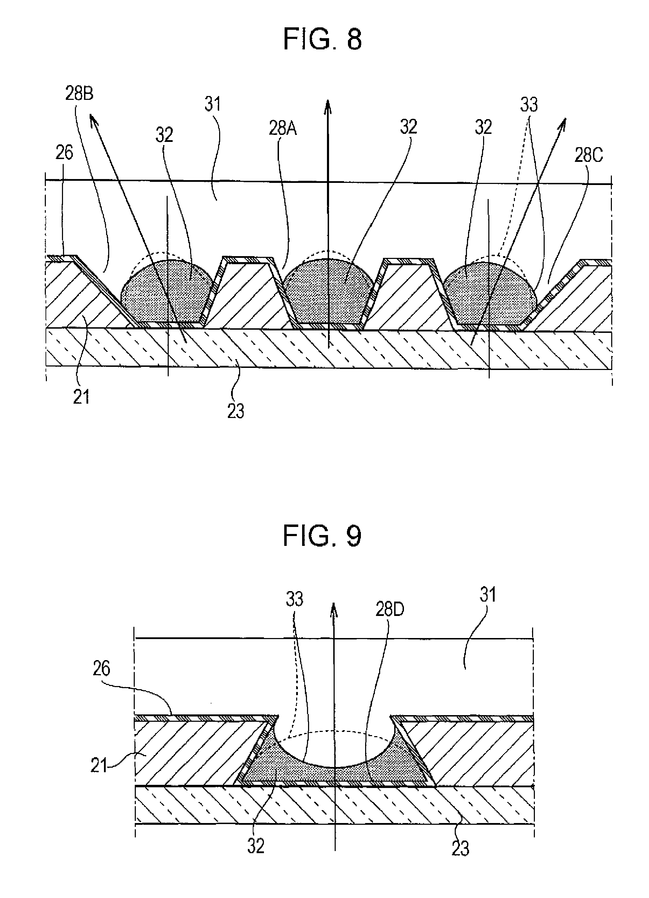

In addition, in each of the above-described embodiments, each of the inclined surfaces forming the tapered inner peripheral surfaces of the recess 28, 48 have the same inclination angle. However, one or more of the inclined surfaces may have an inclination angle different from that of the other inclined surfaces. For example, Fig. 8 shows an example in which two kinds of recesses 28B and 28C having different inclination angles in the left-right direction are provided next to a recess 28A having the inner peripheral surfaces with the same inclination angle in the left-right direction. As in the example shown in the figure, the optical axes of the droplets 32 can be arbitrarily adjusted by arbitrarily adjusting the inclination angles of the inner peripheral surfaces of the recesses 28. Thus, a lens array having a light diffusing function, for example, can be obtained.

In addition, the shape of the recesses is not limited to the above-described inverted quadrangular pyramid shape. As shown in Fig. 9, the present invention can also be applied to a recess 28D having a pyramidal shape with inner peripheral surfaces tapered in a direction such that the area of the opening portion is smaller than the area of the bottom portion. In this case, the curvature of the lens surface (interface) 33 of the droplet 32 is larger than that in the above-described embodiments.

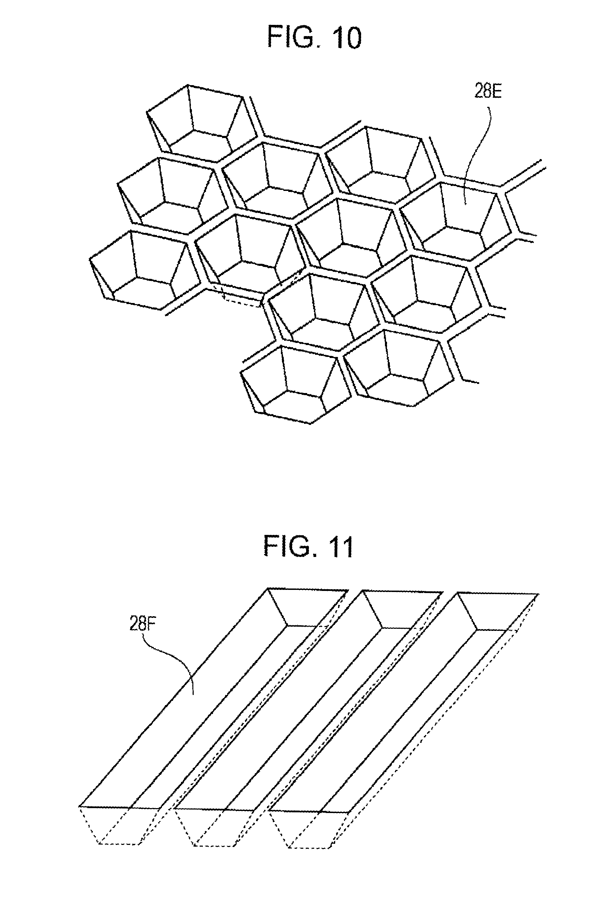

In addition, the shape of the recess is not limited to the quadrangular pyramid shape, and may also be other pyramid shapes such as a triangular pyramid shape and a hexagonal pyramid shape. Fig. 10 shows an example in which recesses 28E having a hexagonal pyramid shape are densely arranged.

Furthermore, as shown in Fig. 11, the openings of the recesses may have a rectangular shape. In such a case, the lens surfaces of the droplets placed in the recesses 28F can be formed in a cylindrical shape or a toroidal shape in which the curvature differs between a long-side direction and a short-side direction. This type of lens can be widely used in, for example, an illumination optical system or in an optical system included in a laser printer, an optical disc apparatus, or the like.

**Claims**

1.    An optical element in which a droplet is placed in a sealed cell, **characterized in that**
      a pyramidal recess that receives the droplet is formed in the cell.

**2.** The optical element according to claim 1, **characterized in that**
the recess has a quadrangular trapezoidal pyramid shape.

**3.** The optical element according to claim 1, **characterized in that**
the cell includes
a pair of transparent substrates,
a liquid chamber formed between the pair of transparent substrates,
first liquid and second liquid contained in the liquid chamber and having refractive indices that are different from each other, and
an electrode layer disposed in the liquid chamber and having a surface covered with an insulating film,
wherein the first liquid is conductive and the second liquid is insulative, the first liquid and the second liquid existing in the liquid chamber without being mixed with each other, and
wherein the recess is formed in a face of the electrode layer and one of the first liquid and the second liquid is placed in the recess.

**4.** The optical element according to claim 3, **characterized in that**
a transparent electrode layer is formed on one of the pair of transparent substrates that faces the electrode layer across the liquid chamber.

**5.** The optical element according to claim 3, **characterized in that** an interface between the first liquid and the second liquid is aspherical.

**6.** The optical element according to claim 3, **characterized in that**
the electrode layer is made of a single crystal silicon substrate, and
the recess is made of an etching mark formed in a surface of the single crystal silicon substrate.

**7.** The optical element according to claim 1, **characterized in that** inner peripheral surfaces of the recess are water repellent surfaces.

**8.** The optical element according to claim 1, **characterized in that**
all of inclined surfaces forming inner peripheral surfaces of the recess are individually formed so as to have substantially the same inclination angle.

**9.** The optical element according to claim 1, **characterized in that**
one or more of inclined surfaces forming inner peripheral surfaces of the recess are formed so as to have an inclination angle different from that of the other inclined surfaces.

**10.** An optical element including
first liquid that is conductive,
second liquid that is insulative and that has a refractive index different from that of the first liquid, and
a sealed cell in which the first liquid and the second liquid are contained without being mixing with each other,
wherein the optical element is **characterized in that**
the cell includes
a first electrode layer in which a pyramidal through hole that receives the second liquid is formed,
an insulating film that covers the first electrode layer,
a first transparent substrate that is bonded to one of surfaces of the first electrode layer and that closes the through hole at one end thereof,
a second transparent substrate disposed so as to face the other surface of the first electrode layer with a sealing layer disposed therebetween, and
a second electrode layer that is disposed between the first electrode layer and the second transparent substrate and that is in contact with the first liquid.

**11.** The optical element according to claim 10, **characterized in that**
the second electrode layer is a transparent electrode film formed on the second transparent substrate.

**12.** The optical element according to claim 10, **characterized in that**
the optical element further includes a voltage source that is capable of applying a predetermined voltage between the first electrode layer and the second electrode layer.

**13.** A lens array **characterized in that**
in an optical element in which droplets are placed in a sealed cell,
a plurality of pyramidal recesses that receive the droplets are two-dimensionally formed in the cell.

**14.** A lens array including
first liquid that is conductive,
second liquid that is insulative and that has a refractive index different from that of the first liquid, and
a sealed cell in which the first liquid and the second liquid are contained without being mixing with each other,
wherein the lens array is **characterized in that**
the cell includes
a first electrode layer in which a plurality of pyramidal through holes, each of which receives the second liquid, are two-dimensionally arranged,
an insulating film that covers the first electrode layer,
a first transparent substrate that is bonded to one of surfaces of the first electrode layer and that closes the through holes at one end thereof,
a second transparent substrate disposed so as to face the other surface of the first electrode layer with a sealing layer disposed therebetween, and
a second electrode layer that is transparent and that is formed on the inner side of the second transparent substrate.

# FIG. 1

# FIG. 2

36

21a

(100)

21

θ

{111}

# FIG. 3

EP 1 986 023 A1

# FIG. 4

# FIG. 5

EP 1 986 023 A1

# FIG. 6

A

41

58        58

B

41

43

C

41a        41a        41

58        43        58

D

41a        41a        41

58        48        43        48        58

# FIG. 7

E

F

G

# FIG. 8

# FIG. 9

## FIG. 10

28E

## FIG. 11

28F

# FIG. 12

A

θo

3

2

1

B

θr

+ + + + + + + + +

− − − − − − − −

3

2

1

V

EP 1 986 023 A1

# FIG. 13

23

# FIG. 14

## INTERNATIONAL SEARCH REPORT

| International application No. |
| --- |
| PCT/JP2007/052375 |

A. CLASSIFICATION OF SUBJECT MATTER
*G02B3/14*(2006.01)i, *G02B3/00*(2006.01)i, *G02B26/08*(2006.01)i

According to International Patent Classification (IPC) or to both national classification and IPC

B. FIELDS SEARCHED

Minimum documentation searched (classification system followed by classification symbols)
G02B3/14, G02B3/00, G02B26/08

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 00/58763 A1 (University Joseph Fourier), 05 October, 2000 (05.10.00), Full text; all drawings & JP 2002-540464 A      & US 2005/0002113 A1 & FR 2791439 A | 1-14 |
| A | JP 2003-114309 A (Omron Corp.), 18 April, 2003 (18.04.03), Par. No. [0029] (Family: none) | 1-14 |

☐ Further documents are listed in the continuation of Box C.          ☐ See patent family annex.

| | |
| --- | --- |
| * Special categories of cited documents: <br> "A"  document defining the general state of the art which is not considered   to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search <br> 25 April, 2007 (25.04.07) | Date of mailing of the international search report <br> 15 May, 2007 (15.05.07) |
| --- | --- |
| Name and mailing address of the ISA/ <br> Japanese Patent Office | Authorized officer |
| Facsimile No. | Telephone No. |

Form PCT/ISA/210 (second sheet) (April 2005)

**EP 1 986 023 A1**

**Patent documents cited in the description**

- JP 2000356708 A
- JP 11018456 A
- JP 2002540464 PCT